# EUROPEAN PATENT SPECIFICATION

(11) **EP 2 651 675 B1**
(45) Date of publication and mention of the grant of the patent: **10.01.2024**
(21) Application number: 11849559.7
(22) Date of filing: 24.11.2011
(51) Int. Cl.: B60H 1/32, B60H 1/00

(54) **RADIATOR ARRANGEMENT IN A VEHICLE POWERED BY A COMBUSTION ENGINE**
HEIZKÖRPERANORDNUNG IN EINEM DURCH EINEN VERBRENNUNGSMOTOR ANGETRIEBENEN FAHRZEUG
AGENCEMENT DE RADIATEUR DANS UN VÉHICULE ALIMENTÉ PAR UN MOTEUR À COMBUSTION

(30) Priority: 14.12.2010 SE 1051316
(43) Date of publication of application: 23.10.2013
(73) Proprietor: Scania CV AB, 151 87 Södertälje (SE)
(72) Inventor: KARDOS, Zoltan, S-151 35 Södertälje (SE); HALL, Ola, S-117 67 Stockholm (SE)
(74) Representative: Scania CV AB
(86) International application number: PCT/SE2011/051418
(87) International publication number: WO 2012/082050

(56) References cited:
- EP-A1- 1 500 535
- EP-A2- 1 447 249
- EP-A2- 2 191 990
- WO-A1-2004/074021
- DE-A1- 10 316 086
- SE-A- 8 301 741
- US-A- 5 497 941
- US-A1- 2003 159 455
- US-A1- 2009 064 695
- US-B2- 7 048 044
- US-B2- 7 048 044
- US-B2- 7 055 337

## Description

### BACKGROUND TO THE INVENTION AND PRIOR ART

The present invention relates to a radiator arrangement in a vehicle powered by a combustion engine according to the preamble of claim 1.

An AC system is commonly used to cool the cab space in a vehicle. AC systems comprise a cooling circuit with a circulating refrigerant. The circulating refrigerant cools the air in the cab space when it vaporises in an evaporator and gives off heat to surrounding air when it condenses in a condenser. The condenser is usually situated at the front portion of the vehicle near to the radiator in which the coolant in the engine's cooling system is cooled. During operation, air is drawn through the condenser and the radiator by a radiator fan driven by the engine. The engine also drives a compressor which compresses and circulates the refrigerant in the AC system.

It is often desired to use the AC system in the vehicle even at times when the engine is not running. A known practice in this respect is to run the compressor on electrical energy and use an electrically operated fan to force a cooling air flow through the condenser. When the AC system is used at such times, electrical energy is supplied to its compressor and the electric fan from the vehicle's battery. To avoid reducing the capacity of the battery to too low a level, the AC system is run in such circumstances at a significantly lower capacity than when it is powered by the engine. For the AC system to be able to provide acceptable cooling of the air in the cab space, it is important that the refrigerant undergoes effective cooling in the condenser. To achieve this, the electrically operated fan has to force a relatively large amount of air through the condenser. The fan's consumption of electrical energy will thus be relatively high.

US 7 048 044 B2 discloses a radiator arrangement in which a coolant of the cooling system of an engine of a vehicle is in heat-transferring contact with the refrigerant of an AC-system. The engine is used as a power source for driving a compressor in the AC-system. In one operation mode, during start-up of the engine, heat from the refrigerant is adopted by the coolant for the purpose of speeding up the heating of the engine to a suitable operation temperature. The compressor of the AC-system is powered by the engine during such start-up.

US 2009/064695 A1 discloses a radiator arrangement in a vehicle, comprising an AC-system and means for activating the AC-system when the engine is not in operation. The AC-system is powered by a battery upon activation by said activation means.

US 7 055 337 B2 discloses a system in a vehicle comprising an internal combustion engine which has a heat transfer circuit, with a fuel cell and with a climate control unit which is accommodated in the heat transfer circuit of the internal combustion engine for heating and/or cooling of the interior of a motor vehicle. At times when the engine is shut off or unable of delivering sufficient heat to the climate control unit, exhaust heat generated by the fuel cell is separately used for providing heat to the climate control unit.

### SUMMARY OF THE INVENTION

The object of the present invention is to propose a radiator arrangement in a vehicle whereby an AC system can be run in an energy-economising way even at times when the vehicle's engine is not running.

This object is achieved with the radiator arrangement of the kind mentioned in the introduction which is characterised by the features indicated in the characterising part of claim 1. Within a few hours after it has been switched off, a combustion engine usually cools to a temperature close to that of the surroundings. The engine usually comprises an engine block made of metal material with a large mass. When the temperature of the surroundings varies, such a large mass takes a certain time to reach their temperature. When for example the temperature of the surroundings rises after a cold night, the engine may be at a definitely lower temperature than that of the surrounding air. The radiator arrangement therefore comprises a line circuit with a circulating coolant which is in heat-transferring contact with both the engine and the AC system's condenser. The coolant which circulates in the line circuit undergoes good cooling when it comes into contact with the cold engine. The cooled coolant is then used to cool the refrigerant in the condenser. The refrigerant thus undergoes good cooling in the condenser, causing it to have a low vaporisation temperature in the evaporator. The low vaporisation temperature of the refrigerant provides assurance of good cooling of the air in the cab space. As the engine is of large mass, the coolant which circulates in the line circuit can deliver relatively large amounts of thermal energy to the engine without appreciably raising the engine's temperature. The engine may therefore have the advantage of receiving a relatively large amount of thermal energy from the AC system. The radiator arrangement is activated with advantage on warm days when the driver is in the vehicle's cab space but the engine is not running. The cold engine serves in this case as a very good cold source for the AC system. The AC system can thus provide good cooling of the air in the cab space relative to the amount of energy supplied to circulate the coolant in the line circuit and compress the refrigerant in the AC system.

According to a preferred embodiment of the invention, said activation means comprises a manual activation device by which the radiator arrangement can be activated at times when the engine is not running, and a control unit adapted to receiving information from the activation device and to activating a compressor in the AC system and a coolant pump in the line circuit when the activation device is put into an active state. When a person who is in the vehicle's cab space feels too warm, he/she will put the activation device into the active state. The activation device may be a button or the like which is pressed in or moved to an active position. When this is done, the control unit starts both the AC system and the circulation of coolant through the line circuit.

According to another preferred embodiment of the invention, the control unit is adapted to receiving information from a sensor which monitors a parameter related to the temperature of the engine, and to only circulating coolant through the line circuit if it receives information that the engine is at a lower temperature than a reference value. The reference value may be a predetermined temperature or a temperature which is related to that of the surrounding air. When the engine is used as cold source, it continuously receives thermal energy from the coolant circulating in the line circuit. The engine thus acquires a progressively rising temperature. When its temperature exceeds the reference value, the engine is no longer viable as a cold source. The control unit is with advantage adapted to circulating the coolant through an alternative line circuit in which the circulating coolant comes into heat-transferring contact with the condenser but not with the engine at times when the control unit receives information that the engine is at a higher temperature than the reference value. In the alternative line circuit some other cold source is used to cool the circulating coolant.

According to another preferred embodiment of the invention, the radiator arrangement comprises valve means which can be put into a first state in which they led the coolant through said line circuit, and a second state in which they lead the coolant through the alternative line circuit. Suitably located valve means may be used to divert the coolant relatively easily from circulation in the line circuit to circulation in the alternative line circuit. Such switching of the valve means takes place with advantage at times when the engine is at a temperature above the reference value. The alternative line circuit may comprise an air-cooled radiator for cooling the coolant, and the radiator arrangement comprises an electrically operated fan to force a cooling air flow through the radiator at times when the engine is at a temperature above said reference value. The electrically operated compressor may be an extra compressor situated in parallel with an ordinary compressor. Alternatively, the AC system may comprise an ordinary compressor which can also be run on electrical energy, in which case the electrically operated fan with advantage forces air at the temperature of the surroundings through the condenser. This results in good cooling of the refrigerant of the condenser but entails supply of electrical energy to run the fan.

According to another preferred embodiment of the invention, said line circuit comprises at least part of a first cooling system with a circulating coolant intended to cool the engine during operation, and at least part of a second cooling system with a circulating coolant which during normal operation of the engine is at a lower temperature than the coolant in the first cooling system. When a vehicle is equipped with two such cooling systems it is very appropriate to use suitable parts of the existing cooling systems for said line circuit and the alternative line circuit. The condenser is with advantage in heat-transferring contact with the coolant in a region of said line circuit which forms part of the second cooling system. This means that the cold coolant in the second cooling system can also be used to cool the refrigerant in the condenser during operation of the engine.

According to another preferred embodiment of the invention, said line circuit comprises at least one line for transfer of coolant between the first cooling system and the second cooling system. If the engine is in the first cooling system and the condenser is in the second cooling system, said line circuit needs to have lines which in some way transfer coolant between the existing cooling systems. The alternative line circuit corresponds with advantage to the second cooling system. The existing coolant pump in the second cooling system may with advantage be used to circulate the coolant through both the line circuit and the alternative line circuit. The coolant led through the alternative line circuit is cooled with advantage by a cooling air flow forced through the radiator by an electrically operated air fan.

### BRIEF DESCRIPTION OF THE DRAWING

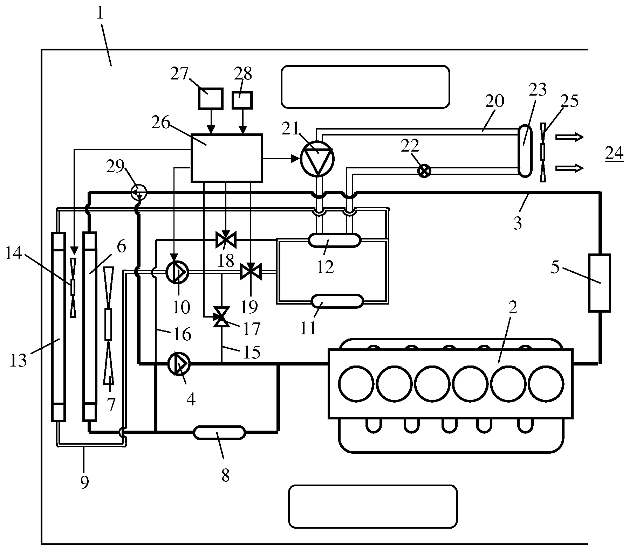

A preferred embodiment of the invention is described below by way of example with reference to the attached drawing, in which
- Fig. 1: depicts a radiator arrangement in a vehicle powered by a combustion engine according to a preferred embodiment of the invention.

### DETAILED DESCRIPTION OF A PREFERRED EMBODIMENT OF THE INVENTION

Fig. 1 depicts schematically a vehicle 1 powered by a combustion engine 2. The engine 2 may be a diesel engine and the vehicle 1 a heavy vehicle. During operation, the engine 2 is cooled by a first cooling system 3. The first cooling system 3 is hereinafter called the engine's cooling system. A first coolant pump 4 circulates the coolant through the engine's cooling system. The first coolant pump 4 may be driven by the engine 2. The first coolant pump 4 circulates the coolant initially through the engine 2. The coolant leaving the engine 2 is led in this case to an oil cooler 5 in which it cools oil which is used in a retarder. When the coolant has cooled the oil in the oil cooler 5, it is led to a thermostat 29. If the coolant is below an intended operating temperature, the thermostat 29 directs it to the coolant pump 4. When the coolant is above the intended operating temperature, it is led to an air-cooled first radiator 6 fitted at a forward portion of the vehicle 1. The coolant is here cooled by air drawn through the first radiator 6 by a radiator fan 7. The radiator fan 7 may in a conventional way be driven by the engine 2. When the coolant has been cooled in the first radiator 6, it is led back to the coolant pump 4 and the engine 2. However, part of the cooled coolant from the first radiator 6 is led in a parallel line to an EGR cooler 8 for cooling of recirculating exhaust gases. The coolant from the EGR cooler 8 is mixed with coolant from the first coolant pump 4 and is led to the engine 2. Coolant in the engine's cooling system is at a temperature of the order of 80-100°C during normal operation.

The vehicle 1 is provided with a second cooling system 9 which may be described as a low-temperature cooling system. A second coolant pump 10 circulates the coolant through the second cooling system. The coolant from the second coolant pump 10 is led initially through two parallel lines. One parallel line comprises a charge air cooler 11 and the other parallel line a condenser 12. The coolant cools charge air in the charge air cooler 11 and a refrigerant in the condenser 12. The coolant is then led through a common line to a second radiator 13 fitted at the forward portion of the vehicle 1. The coolant is here cooled by air drawn through the second radiator 13 by the radiator fan 7. Alternatively, an electrically operated fan 14 may be used to draw air through the second radiator 13. The coolant which has been cooled in the second radiator 13 is then led back to the second coolant pump 10. The second radiator 13 is fitted in front of the first radiator 6. The coolant in the second cooling system 9 will thus be cooled by air at the temperature of the surroundings, whereas the coolant in the engine's cooling system 3 will be cooled by air at a higher temperature. The coolant in the second cooling system 9 may therefore be at a significantly lower temperature than the coolant in the engine's cooling system 3. In the second radiator 13 the coolant may in favourable circumstances be cooled to a temperature close to the temperature of the surroundings.

The engine's cooling system 3 may be connected to the second cooling system 9 by a first line 15 and a second line 16. The first line 15 comprises a first valve 17. The second line 16 comprises a second valve 18. A third valve 19 is provided in the second cooling system 9 at a location substantially immediately downstream of the location where the first line 15 is connected to the second cooling system 9. The vehicle is provided with an AC system 20 comprising not only said condenser 12 but also a compressor 21 adapted to compressing and circulating the refrigerant in the AC system 20. The AC system 20 further comprises an expansion valve 22 adapted to reducing the pressure of the refrigerant, and an evaporator 23 in which the refrigerant is intended to vaporise. The evaporator 23 is situated close to a cab space 24 in the vehicle 1. A fan 25 forces air in the cab space 24 or air which is led into the cab space 24 through the evaporator 23 so that it undergoes cooling. An electrical control unit 26 is adapted to receiving information from a manual activation device 27 which may be a push-button or equivalent which is put into an active state when the AC system 20 is to be activated. The control unit 26 is also adapted to receiving information from a temperature sensor 28 which monitors the temperature of the engine 2. The control unit 26 is adapted to controlling the activation of the second coolant pump 10, the air fan 14 and the compressor 21 and to being able to put the valves 17, 18, 19 into open and closed states.

During operation of the engine 2, the control unit 26 puts the first valve 17 and the second valve 18 into a closed state. This means that no coolant can circulate between the engine's cooling system 3 and the second cooling system 9. At the same time, the control unit 26 puts the third valve 19 into an open state so that cold coolant from the second coolant pump 10 can be led to the charge air cooler 11 and the condenser 12. The engine's cooling system 3 and the second cooling system 9 thus operate as two completely separate cooling systems when the engine 2 is in operation. The coolant in the second cooling system 9 will thus be at a definitely lower temperature than the coolant in the engine's cooling system 3. During operation of the engine 2, the AC system 20 may be activated automatically or by a person in the vehicle putting the manual activation device 27 into the active position. When this takes place, the control unit 26 starts the compressor 21 so that it compresses and circulates the refrigerant in the AC system 20. The circulating refrigerant is cooled in the condenser 12 by the coolant which is circulated in the second cooling system 9 by the second coolant pump. As the coolant in the second cooling system 9 may in favourable circumstances be at a temperature close to the temperature of the surroundings, the refrigerant undergoes very good cooling in the condenser 12. When the refrigerant has expanded through the expansion valve 22, it will be at a low pressure and a low temperature. The cold refrigerant is led to the evaporator 23, in which it is warmed by the air in the cab space 24 to a temperature at which it vaporises. The vaporised refrigerant is then led back to the compressor 21 from the evaporator 23. The compressor 21 compresses the refrigerant so that it reverts to a high pressure and a high temperature.

When the engine 2 is in operation, it drives the compressor 21. The engine is also used with advantage to drive the radiator fan 7 so that it forces a cooling air flow through the first radiator 6 and the second radiator 13. The coolant in the second cooling system 9 therefore undergoes very good cooling in the second radiator 13. The cold coolant in the second cooling system 9 is then used to cool the refrigerant in the condenser 12. The refrigerant thus assumes a relatively low condensation temperature in the condenser 12. A low condensation temperature in the condenser 12 makes it possible for the refrigerant to have a low vaporisation temperature in the evaporator 23. The air in the cab space 24 may thus undergo very good cooling in the evaporator by the cold refrigerant.

At times when the engine 2 is not in operation, the AC system may be activated by using the manual activation device 27. When it receives information that the manual activation device 27 has been put into an active state, the control unit 26 will find that the AC system 20 is to be activated. It then connects the vehicle's battery in an appropriate way to the compressor 21. Alternatively, the AC system 20 may comprise two compressors, viz. an ordinary compressor driven by the engine 2 and an electrically powered extra compressor 21 run on stored electrical energy from the vehicle's battery. At the same time, the control unit 26 will start the second coolant pump 10 and hence the circulation of coolant which cools refrigerant in the condenser 12. The present invention primarily uses the engine 2 as cold source for cooling the circulating coolant. A combustion engine 2 in a heavy vehicle may weigh nearly 800 kg. Such a large mass may store relatively large amounts of thermal energy. For the engine 2 to be used as cold source, however, it needs to be cold. It is therefore not usable as cold source until it has cooled to a temperature substantially corresponding to that of the surroundings. This may only be when the engine has not been in operation for a certain time. The control unit 26 receives information from the temperature sensor 28 for deciding whether the engine 2 has become cool enough to be usable as cold source. The control unit 26 may here compare the temperature of the engine 2 with a reference value T_{ref} which may be related to the temperature of the surroundings.

If it receives information from the temperature sensor 28 that the engine 2 is at a lower temperature than the reference value T_{ref}, the control unit 26 puts the first valve 17 and the second valve 18 into open states. The third valve 19 is put into a closed state. This means that the coolant leaving the second coolant pump 10 will initially be led through the first line 15 because of the first valve 17 being open while the third valve 19 is closed. The coolant is thus transferred from the second cooling system 9 to the engine's cooling system 3 via the first line 15. It is then led through the engine 2. The coolant is here cooled in a very effective way by the engine block. In this case the coolant is led through corresponding coolant ducts used for cooling the engine 2 during operation. The cold coolant leaving the engine 2 is led via the oil cooler 5 to the first radiator 6. Since the radiator fan 7 is not in operation when the engine 2 is not running, the coolant undergoes substantially no cooling in the first radiator 6. The coolant leaving the first radiator 6 is therefore gradually led back to the second cooling system 9 via the second line 16. This is possible because of the first coolant pump 4 not being in operation while at the same time the second valve 18 in the second line 16 is open. The cold coolant then passes through the condenser 12, in which it cools the refrigerant in the AC system 20. When the coolant cools the refrigerant in the condenser 12, it undergoes warming. The relatively warm coolant then proceeds to the first radiator 13. As the radiator fan 7 is not in operation, the coolant undergoes only slight cooling in the second radiator 13. It is then led back to the second coolant pump 10 before being led through the engine 2 again.

The coolant is circulated in this case through a line circuit which comprises substantially the whole of the engine's cooling system 3 and the whole of the second cooling system 9. The coolant is here led alternately through the respective cooling systems 3, 9. It thus comes into heat-transferring contact with the engine 2 in the engine's cooling system 3 and with the condenser 12 in the second cooling system 9. The coolant here gives off in the engine block thermal energy acquired by it in the condenser 12. The engine 2 thus undergoes a certain warming.

When it receives information from the temperature sensor 28 that the engine 2 is at a higher temperature than the reference value T_{ref}, the control unit 26 will find that the engine 2 is no longer viable as a cold source. When such is the case, the control unit 26 starts the electrically operated air fan 14, resulting in a cooling air flow through the second radiator 13. At the same time, the control unit 26 puts the first valve 17 and the second valve 18 into closed states. It also ensures that the third valve 19 is put into an open position. The fact that the first valve 17 and the second valve 18 are closed breaks the circulation of coolant between the engine's cooling system 3 and the second cooling system 9. The coolant is thus circulated in an alternative line circuit. The alternative line circuit corresponds in this case to the whole of the second cooling system 9. The coolant is thus led from the second coolant pump 10 to the condenser, in which it cools the refrigerant in the AC system 20. The coolant is then led to the second radiator 13, in which it is cooled by surrounding air which the air fan 14 draws through the second radiator 13. The coolant undergoes cooling in the second radiator 13 before being led back to the second coolant pump 10. The coolant circulated in the alternative line circuit absorbs thermal energy in the condenser 12 and gives off thermal energy to the air forced through the second radiator 13.

The invention is in no way restricted to the embodiment to which the drawing refers but may be varied freely within the scopes of the claims.

## Claims

1. A radiator arrangement for a vehicle (1) powered by a combustion engine (2), which arrangement comprises an AC system (20) with a circulating refrigerant adapted to giving off heat in a condenser (12) and to absorbing heat in an evaporator (23) which is in contact with air close to a cab space (24) in the vehicle (1), the AC system (20) comprising a compressor (21), and a line circuit in which circulating coolant comes into heat-transferring contact with the engine (2), the line circuit comprising a coolant pump (10), wherein the condenser (12) of the AC system is also in heat-transferring contact with coolant which circulates through the line circuit, **characterised in that** the radiator arrangement comprises activation means which make it possible for the AC system (20) to be activated and coolant to be circulated through the line circuit at times when the engine (2) is not in operation, wherein said activation means comprises an activation device (27) by which the radiator arrangement can be activated at times when the engine is not in operation, and a control unit (26) adapted to receiving information from the activation device (27) and to activate the compressor (21) in the AC system and the coolant pump (10) in said line circuit when the activation device (27) has been put into an active position.

2. The radiator arrangement according to claim 1, **characterised in that** the control unit (26) is adapted to receive information from a sensor (28) which monitors a parameter related to the temperature of the engine (2), and to only circulate coolant through the line circuit if the engine (2) is at a lower temperature than a reference value (T_{ref}).

3. The radiator arrangement according to claim 2, **characterised in that** the control unit (26) is adapted to circulate the coolant through an alternative line circuit when the circulating coolant comes into heat-transferring contact with the condenser (12) but not into heat-transferring contact with the engine (2) at times when the engine is at a higher temperature than the reference value (T_{ref}).

4. The radiator arrangement according to claim 3, **characterised in that** the radiator arrangement comprises valve means (17, 18, 19) which can be put into first states in which they lead the coolant through the line circuit, and into second states in which they lead the coolant through the alternative line circuit.

5. The radiator arrangement according to claim 3 or 4, **characterised in that** the alternative line circuit comprises an air-cooled radiator (13) for cooling the coolant and that the radiator arrangement comprises an electrically operated fan (14) adapted to force air through said radiator (13) at times when the engine (2) is at a higher temperature than said reference value (T_{ref}).

6. The radiator arrangement according to any one of the foregoing claims, **characterised in that** said line circuit comprises at least part of a first cooling system (3) with circulating coolant intended to cool the engine (2) during operation, and at least part of a second cooling system (9) with circulating coolant which during normal operation of the engine (2) is at a lower temperature than the coolant in the first cooling system (3).

7. The radiator arrangement according to claim 6, **characterised in that** the condenser (12) is in heat-transferring contact with coolant in a region of the line circuit which forms part of the second cooling system (9).

8. The radiator arrangement according to claim 6 or 7, **characterised in that** the line circuit comprises at least one line (15, 16) for the transfer of coolant between the first cooling system (3) and the second cooling system (9).

9. The radiator arrangement according to any one of claims 6 to 8, **characterised in that** the alternative line circuit corresponds to the second cooling system (9).

## Patentansprüche

1. Kühleranordnung für ein von einem Verbrennungsmotor (2) angetriebenes Fahrzeug (1), wobei die Anordnung ein Air-Condition System (20) mit einem zirkulierenden Kältemittel umfasst, das dazu geeignet ist, Wärme in einem Kondensator (12) abzugeben und Wärme in einem Verdampfer (23) zu aufzunehmen, der nahe einem Fahrerhaus (24) in dem Fahrzeug (1) in Kontakt mit Luft steht, wobei das Air-Condition System (20) einen Kompressor (21) und einen Leitungskreislauf umfasst, in dem zirkulierendes Kühlmittel in wärmeübertragenden Kontakt mit dem Motor (2) kommt, wobei der Leitungskreislauf eine Kühlmittelpumpe (10) aufweist,
wobei der Kondensator (12) des Air-Condition System ebenfalls in wärmeübertragendem Kontakt mit durch den Leitungskreislauf zirkulierendem Kühlmittel steht, **dadurch gekennzeichnet, dass** die Kühleranordnung eine Aktivierungseinrichtung umfasst, die es ermöglicht, das Air-Condition System (20) zu aktivieren und Kühlmittel durch den Leitungskreislauf zu Zeiten zu zirkulieren, in denen der Motor (2) nicht in Betrieb ist, wobei die Aktivierungseinrichtung eine Aktivierungsvorrichtung (27), mittels der die Kühleranordnung zu Zeiten aktiviert werden kann, in denen der Motor nicht in Betrieb ist, und eine Steuereinheit (26) umfasst, die dazu eingerichtet ist, Informationen von der Aktivierungsvorrichtung (27) zu empfangen und den Kompressor (21) in dem Air-Condition System und die Kühlmittelpumpe (10) in dem Leitungskreislauf zu aktivieren, wenn die Aktivierungsvorrichtung (27) in eine aktive Position gebracht worden ist.

2. Kühleranordnung nach Anspruch 1, **dadurch gekennzeichnet, dass** die Steuereinheit (26) dazu eingerichtet ist, Informationen von einem Sensor (28) zu empfangen, der einen Parameter überwacht, welcher mit der Temperatur des Motors (2) zusammenhängt, und nur dann Kühlmittel durch den Leitungskreislauf zu zirkulieren, wenn die Temperatur des Motors (2) niedriger als ein Referenzwert (T_{ref}) ist.

3. Kühleranordnung nach Anspruch 2, **dadurch gekennzeichnet, dass** die Steuereinheit (26) dazu eingerichtet ist, das Kühlmittel durch einen alternativen Leitungskreislauf zirkulieren zu lassen, wenn das zirkulierende Kühlmittel in wärmeübertragenden Kontakt mit dem Kondensator (12), nicht jedoch in wärmeübertragenden Kontakt mit dem Motor (2) zu Zeiten kommt, in denen der Motor eine höhere Temperatur als der Referenzwert (T_{ref}) hat.

4. Kühleranordnung nach Anspruch 3, **dadurch gekennzeichnet, dass** die Kühleranordnung Ventilmittel (17, 18, 19) aufweist, die in erste Zustände, in denen sie das Kühlmittel durch den Leitungskreislauf führen, und in zweite Zustände versetzt werden können, in denen sie das Kühlmittel durch den alternativen Leitungskreislauf führen.

5. Kühleranordnung nach Anspruch 3 oder 4, **dadurch gekennzeichnet, dass** der alternative Leitungskreislauf einen luftgekühlten Kühler (13) zum Kühlen des Kühlmittels aufweist und dass die Kühleranordnung einen elektrisch betriebenen Ventilator (14) aufweist, der dazu eingerichtet ist, Luft durch den Kühler (13) zu Zeiten zu drücken, in denen der Motor (2) eine höhere Temperatur als der Referenzwert (T_{ref}) hat.

6. Kühleranordnung nach einem der vorhergehenden Ansprüche, **dadurch gekennzeichnet, dass** der Leitungskreislauf mindestens einen Teil eines ersten Kühlsystems (3) mit zirkulierendem Kühlmittel, das dazu bestimmt ist, den Motor (2) während des Betriebs zu kühlen, und mindestens einen Teil eines zweiten Kühlsystems (9) mit zirkulierendem Kühlmittel umfasst, das während des normalen Betriebs des Motors (2) eine niedrigere Temperatur als das Kühlmittel im ersten Kühlsystem (3) hat.

7. Kühleranordnung nach Anspruch 6, **dadurch gekennzeichnet, dass** der Kondensator (12) in einem Bereich des Leitungskreislaufs, der einen Teil des zweiten Kühlsystems (9) bildet, in wärmeübertragendem Kontakt mit Kühlmittel steht.

8. Kühleranordnung nach Anspruch 6 oder 7, **dadurch gekennzeichnet, dass** der Leitungskreislauf mindestens eine Leitung (15, 16) zur Übertragung von Kühlmittel zwischen dem ersten Kühlsystem (3) und dem zweiten Kühlsystem (9) aufweist.

9. Kühleranordnung nach einem der Ansprüche 6 bis 8, **dadurch gekennzeichnet, dass** der alternative Leitungskreislauf dem zweiten Kühlsystem (9) entspricht.

## Revendications

1. Agencement de radiateur pour un véhicule (1) alimenté par un moteur à combustion (2), lequel agencement comprend un système AC (20) avec un liquide de refroidissement en circulation adapté pour évacuer la chaleur dans un condenseur (12) et pour absorber la chaleur dans un évaporateur (23) qui est en contact avec l'air à proximité d'un espace de cabine (24) dans le véhicule (1), le système AC (20) comprenant un compresseur (21), et un circuit de conduite dans lequel le liquide de refroidissement en circulation entre en contact de transfert de chaleur avec le moteur (2), le circuit de conduite comprenant une pompe de liquide de refroidissement (10),
dans lequel le condenseur (12) du système AC est également en contact de transfert de chaleur avec le liquide de refroidissement qui circule à travers le circuit de conduite, **caractérisé en ce que** l'agencement de radiateur comprend des moyens d'activation qui permettent au système AC (20) d'être activé et au liquide de refroidissement d'être mis en circulation à travers le circuit de conduite à des moments auxquels le moteur (2) n'est pas en fonctionnement, dans lequel ledit moyen d'activation comprend un dispositif d'activation (27) par lequel l'agencement de radiateur peut être activé à des moments auxquels le moteur n'est pas en fonctionnement, et une unité de commande (26) adaptée pour recevoir des informations du dispositif d'activation (27) et pour activer le compresseur (21) dans le système AC et la pompe de liquide de refroidissement (10) dans ledit circuit de conduite lorsque le dispositif d'activation (27) a été placé dans une position active.

2. Agencement de radiateur selon la revendication 1, **caractérisé en ce que** l'unité de commande (26) est adaptée pour recevoir des informations provenant d'un capteur (28) qui surveille un paramètre lié à la température du moteur (2), et pour ne faire circuler le liquide de refroidissement à travers le circuit de conduite que si le moteur (2) est à une température inférieure à une valeur de référence (T_{ref}).

3. Agencement de radiateur selon la revendication 2, **caractérisé en ce que** l'unité de commande (26) est adaptée pour faire circuler le liquide de refroidissement à travers un circuit de conduite alternatif lorsque le liquide de refroidissement en circulation entre en contact de transfert de chaleur avec le condenseur (12) mais n'entre pas en contact de transfert de chaleur avec le moteur (2) à des moments auxquels le moteur est à une température supérieure à la valeur de référence (T_{ref}).

4. Agencement de radiateur selon la revendication 3, **caractérisé en ce que** l'agencement de radiateur comprend des systèmes de vanne (17, 18, 19) qui peuvent être mis dans des premiers états dans lesquels ils acheminent le liquide de refroidissement à travers le circuit de conduite, et dans des deuxièmes états dans lesquels ils acheminent le liquide de refroidissement à travers le circuit de conduite alternatif.

5. Agencement de radiateur selon la revendication 3 ou 4, **caractérisé en ce que** le circuit de conduite alternatif comprend un radiateur refroidi par air (13) pour refroidir le liquide de refroidissement et **en ce que** l'agencement de radiateur comprend un ventilateur actionné électriquement (14) adapté pour forcer l'air à travers ledit radiateur (13) à des moments auxquels le moteur (2) est à une température supérieure à ladite valeur de référence (T_{ref}).

6. Agencement de radiateur selon l'une quelconque des revendications précédentes,
**caractérisé en ce que** ledit circuit de conduite comprend au moins une partie d'un premier système de refroidissement (3) avec un liquide de refroidissement en circulation destiné à refroidir le moteur (2) pendant le fonctionnement, et au moins une partie d'un deuxième système de refroidissement (9) avec un liquide de refroidissement en circulation qui pendant le fonctionnement normal du moteur (2) est à une température inférieure à celle du liquide de refroidissement dans le premier système de refroidissement (3).

7. Agencement de radiateur selon la revendication 6, **caractérisé en ce que** le condenseur (12) est en contact de transfert de chaleur avec le liquide de refroidissement dans une zone du circuit de conduite qui fait partie du deuxième système de refroidissement (9).

8. Agencement de radiateur selon la revendication 6 ou 7, **caractérisé en ce que** le circuit de conduite comprend au moins une conduite (15, 16) pour le transfert de liquide de refroidissement entre le premier système de refroidissement (3) et le deuxième système de refroidissement (9).

9. Agencement de radiateur selon l'une quelconque des revendications 6 à 8, **caractérisé en ce que** le circuit de conduite alternatif correspond au deuxième système de refroidissement (9).
